(19) Europäisches Patentamt
European Patent Office
Office européen des brevets

(11) EP 3 919 185 A1

(12) EUROPEAN PATENT APPLICATION
published in accordance with Art. 153(4) EPC

(43) Date of publication:
**08.12.2021 Bulletin 2021/49**

(21) Application number: **20749076.4**

(22) Date of filing: **16.01.2020**

(51) Int Cl.:
***B05D 1/28*** (2006.01) ***B05D 3/02*** (2006.01)
***B05D 3/12*** (2006.01) ***B05D 5/00*** (2006.01)
***B05D 7/00*** (2006.01) ***B05D 7/04*** (2006.01)
***B05D 7/24*** (2006.01) ***B32B 27/36*** (2006.01)
***C08J 7/04*** (2020.01) ***C09J 11/00*** (2006.01)
***C09J 167/00*** (2006.01) ***C09J 175/04*** (2006.01)

(86) International application number:
**PCT/JP2020/001184**

(87) International publication number:
**WO 2020/158403 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2019 JP 2019015237**

(71) Applicant: **TOYOBO CO., LTD.**
**Osaka-shi**
**Osaka 530-8230 (JP)**

(72) Inventors:
- **YAMAGUCHI Yohei**
**Otsu-shi, Shiga 520-0292 (JP)**
- **TAKI Hiroshi**
**Otsu-shi, Shiga 520-0292 (JP)**
- **TAKII Isao**
**Otsu-shi, Shiga 520-0292 (JP)**
- **ITO Katsuya**
**Osaka-shi, Osaka 530-8230 (JP)**

(74) Representative: **Vossius & Partner**
**Patentanwälte Rechtsanwälte mbB**
**Siebertstraße 3**
**81675 München (DE)**

## (54) READILY ADHESIVE POLYESTER FILM AND METHOD FOR PRODUCING SAME

(57) This invention provides a readily adhesive polyester film that has fewer flaws and in which no appearance defects occur due to tight winding during the storage of rolled products, and a method for efficiently producing the readily adhesive polyester film. More specifically, this invention provides a readily adhesive polyester film comprising a polyester film as a base film and a readily adhesive layer on at least one side of the base film, wherein the base film contains particles with an average particle diameter of 0.1 μm or more and 2 μm or less in an amount of 1 mass% or less based on the mass of the base film, and the readily adhesive layer is a cured product of a composition comprising a copolymerized polyester resin (A), a blocked isocyanate group-containing urethane resin (B), and a silicone surfactant (C). This invention also provides a method for producing a readily adhesive polyester film, the method being based on an in-line coating method.

EP 3 919 185 A1

## Description

### Technical Field

The present invention relates to a readily adhesive polyester film, and a production method for producing the readily adhesive polyester film. More specifically, the present invention relates to a readily adhesive polyester film with fewer of the flaws that occur during the film-forming process, fewer appearance defects caused by tight winding during the storage of rolled products, and excellent adhesion with oxidative polymerization-type inks, UV curable-type inks, hard-coat resins, etc., and relates to a method for efficiently producing the readily adhesive polyester film.

### Background Art

In recent years, there has been a remarkable increase in the popularity of smaller and lighter laptop personal computers, tablet computers, and cell phone devices. For example, products that are provided with a color liquid crystal display have been put into practical use not only in laptop personal computers, but also in a wide variety of products such as liquid crystal televisions and portable communication devices (e.g., tablet computers), while achieving higher resolution.

An increase in resolution increases the black matrix area, and thus decreases the pixel aperture ratio. Therefore, it becomes important to adjust the luminance of the backlight unit.

As a method for improving the optical efficiency of the backlight unit, for example, a backlight comprising, on the light-outgoing surface side of the light guide of the backlight, a lens sheet on which many prism row lens units are formed on one surface, or a lens sheet on which many lenticular row lens units are formed, has been proposed.

These lens sheets improve the front luminance by directing the light emitted from the backlight toward the front of the display through refraction. Lens sheets are typically obtained by using transparent plastic resins with excellent formability, such as polycarbonate resins, acrylic resins, and polyester resins, as the base material (base film). In particular, polyester resins are widely adopted from the viewpoint of their excellent transparency, dimensional stability, and chemical resistance. However, there has been a trend toward strengthening control over film defects as the need for luminance adjustment increases.

Biaxially stretched polyester films are typically obtained by melting and extruding polyester resin to form a sheet. The sheet is transported by conveyor rolls, and biaxially stretched in the film-winding direction (MD direction) and width direction (TD direction). Sequential biaxial stretching methods and simultaneous biaxial stretching methods are typically used as stretching methods, and sequential biaxial stretching methods are most widely used. In a sequential biaxial stretching method, a film is stretched in the MD direction by using the speed difference between the conveyor rolls, and then stretched in the TD direction with tenter clips.

When a film passes through conveyer rolls during the film-forming process, foreign matter on the conveyor rolls can form small scratches on the film. Such foreign matter is present mainly because of oligomers and other substances generated during the film-forming process. In order to obtain high-quality films, measures have been proposed, such as periodic roll-cleaning and the use of lower oligomer starting materials, as disclosed in Patent Literature (PTL) 1.

Further, reducing small scratches by providing protrusions on a film surface has been studied. The effect on scratches typically corresponds to SRa (center surface average roughness), which is a surface roughness index; it is known that the higher the SRa, the higher the effect on scratches. Protrusions may be provided on a film surface by a method of forming a film having a three-layer structure, and adding inert particles to the film surface layer. However, the addition of inert particles to a film increases haze, which is an index of film transparency, due to a difference in refractive index between the resin and the inactive particles; this results in loss of transparency.

To address these problems, PTL 2 and PTL 3 propose using inert particles with different particle sizes to thus achieve both transparency and scratch resistance. In addition, PTL 4 proposes improving the transparency by extremely reducing the thickness of the surface layer of the three-layer structure, and reducing the number of particles that do not contribute to the protrusions.

The reduction of scratches and foreign matter, which are optical defects, has been addressed without problems by proposals such as those disclosed in PTL 1. However, displays with higher definition have been rapidly developed, and it is believed that small scratches and foreign matter that were not considered to be a problem in the past will probably become recognized as optical defects.

In addition, due to an increase in productivity, the line speed in the processing process and the film-forming process has rapidly been increasing, which requires a reduction in optical defects even under such high-speed processing conditions. To address this matter, an analysis was conducted to reduce the optical defects, such as small scratches, by providing protrusions on a film surface as disclosed in PTL 2 to PTL 4. However, the use of porous microparticles with an average particle diameter of 1 $\mu$m or less as disclosed in PTL 2 and 3 results in agglomeration of the microparticles, and the particles could not be dispersed uniformly in the resin. The agglomeration of particles caused fish-eye defects.

Accordingly, the optical defects could not be reduced to a level that can solve the above problems.

Furthermore, if the resin layer is made overly thin relative to the particles as disclosed in PTL 4, the particles will drop out of the resin layer during high-speed processing and film formation; this is a cause for concern, because it can be a new cause of optical defects. The method disclosed in PTL 5, in which the amount of amorphous bulk silica with a particle diameter of 2 μm or more added to the film is adjusted to 0.030 mass% or less, and particles of about 0.5 μm are added to a readily adhesive layer, does not cause scratches on the film-forming line. However, when tight winding of rolls occurs due to changes with time of rolled products, minute misalignment occurs in the film and thus causes particles to drop out of the readily adhesive layer, resulting in the occurrence of white unevenness as an appearance defect.

Given the above, it is revealed that there are still no measures to stably obtain high-quality optical films that have fewer optical defects and that can deal with higher definition and improved productivity.

Citation List

Patent Literature

PTL 1: JP2007-130984A
PTL 2: JPH10-46012A
PTL 3: JPH08-73623A
PTL 4: JP2003-231229A
PTL 5: JP2011-5648A

Summary of Invention

Technical Problem

In view of the problems of the conventional art described above, the problem to be solved by the present invention is to provide a readily adhesive polyester film that has fewer flaws and in which no appearance defects occur due to tight winding etc. during the storage of rolled products; and to provide a method for efficiently producing the readily adhesive polyester film.

Solution to Problem

More specifically, the present invention provides the following subject matter.

1. A readily adhesive polyester film comprising a polyester film as a base film and a readily adhesive layer on at least one side of the base film,

    wherein the base film contains particles with an average particle diameter of 0.1 μm or more and 2 μm or less in an amount of 1 mass% or less based on the mass of the base film, and
    the readily adhesive layer is a cured product of a composition comprising a copolymerized polyester resin (A), a blocked isocyanate group-containing urethane resin (B), and a silicone surfactant (C).

2. The readily adhesive polyester film according to Item 1, wherein the readily adhesive layer contains particles with an average particle diameter of 20 nm or more and 200 nm or less.

3. The readily adhesive polyester film according to Item 1 or 2, wherein the copolymerized polyester resin (A) and the blocked isocyanate group-containing urethane resin (B) are present in the composition constituting the readily adhesive layer in a mass ratio, on a solids basis, of (A)/(B) of 28/72 to 72/28.

4. A method for producing the readily adhesive polyester film of any one of Items 1 to 3, the method comprising

    preparing a coating liquid by diluting a composition comprising at least a copolymerized polyester resin (A), a blocked isocyanate group-containing urethane resin (B), and a silicone surfactant (C) with a solvent, the solvent containing water and alcohol in a mass ratio of water/alcohol of 100/0 to 85/15, and
    forming a readily adhesive layer by applying the coating liquid to at least one side of an unstretched film or a

uniaxially stretched film during a production process of a base film by a gravure coating method or a bar coating method, stretching the film in at least one uniaxial direction that is not stretched, and performing heat treatment.

Advantageous Effects of Invention

The present invention is capable of providing a readily adhesive polyester film that has fewer flaws and in which no appearance defects occur due to tight winding during the storage of rolled products, and providing a method for efficiently producing the readily adhesive polyester film.

Description of Embodiments

Base Film

Examples of polyester resins that constitute a polyester film, which is the base film in the present invention, include polyethylene terephthalate, polybutylene terephthalate, polytrimethylene terephthalate, polyethylene-1,2-diphenoxyethane-4,4'-dicarboxylate, and polyethylene-2,6-naphthalate. It is also possible to use copolymerized polyesters obtained by copolymerizing polymer components of these resins as the main component and any other ester constituent units.

The base film preferably contains particles with an average particle diameter of 0.1 μm or more and 2 μm or less in an amount of 1 mass% or less, based on the mass of the base film. The particles with an average particle diameter within this range are preferably contained in an amount of 1 mass% or less to prevent the occurrence of flaws on the rolls for stretching and/or drying in the film-forming process. The particles with an average particle diameter of 2 μm or less are preferably contained in an amount of 1 mass% or less to lower the haze and achieve excellent transparency. The average particle diameter is preferably 1.5 μm or less, and more preferably 1.0 μm or less. The content of particles is more preferably 0.2 mass% or less, particularly preferably 0.1 mass% or less, and most preferably 0.05 mass% or less. The lower limit of the particle content is preferably 0.001 mass% or more. The lower limit is more preferably, but is not limited to, 0.005 mass% or more. The type of particles contained in the base film is not particularly limited. Examples include organic particles, such as siloxane-copolymerized acrylic resins, crosslinked polystyrene, polystyrene-divinylbenzene, polymethylmethacrylate, methyl methacrylate copolymers, methyl methacrylate-copolymerized crosslinked products, polytetrafluoroethylene, polyvinylidene fluoride, polyacrylonitrile, benzoguanamine resins, silicone resins, and acrylic resins; and inorganic particles, such as silica, alumina, titanium dioxide, zirconium oxide, kaolin, talc, graphite, calcium carbonate, feldspar, molybdenum disulfide, carbon black, and barium sulfate. It is also possible to use core-shell particles with a multilayer structure consisting of materials with different properties in the inner and outer portions. Silica particles are particularly preferred for their various desirable properties as lubricants.

The base film can be a uniaxially or biaxially stretched film. The base film is preferably a biaxially stretched film, in terms of mechanical properties etc. The stretching method may be performed by simultaneous biaxial stretching. However, the production process for a sequential biaxial stretched film is preferably used.

The readily adhesive polyester film of the present invention preferably has a haze of 2% or less. The haze is preferably 2% or less to achieve excellent optical characteristics and appearance when used in optical fields, or when used after printing. The haze is more preferably 1.5% or less, and still more preferably 1.0% or less. The smaller the haze, the more preferable; however, the haze can be 0.1% or more, or 0.3% or more.

Readily Adhesive Layer

In the present invention, a readily adhesive layer comprising a copolymerized polyester resin (A), a blocked isocyanate group-containing urethane resin (B), and a silicone surfactant (C) is formed on at least one side of the base film to improve adhesion with inks, hard-coat materials, etc. In the present invention, the expression "the readily adhesive layer is a cured product of a composition comprising a copolymerized polyester resin (A), a blocked isocyanate group-containing urethane resin (B), and a silicone surfactant (C)" is used. This is because it is extremely difficult to accurately express the composition of the readily adhesive layer after being cured.

The glycol component (diol component) used in the polymerization of the copolymerized polyester resin (A) preferably has a branched structure. Examples of branched glycol components include 2,2-dimethyl-1,3-propanediol, 2-methyl-2-ethyl-1,3-propanediol, 2-methyl-2-propyl-1,3-propanediol, 2-methyl-2-isopropyl-1,3-propanediol, 2-methyl-2-butyl-1,3-propanediol, 2-methyl-2-n-hexyl-1,3-propanediol, 2,2-diethyl-1,3-propanediol, 2-ethyl-2-n-butyl-1,3-propanediol, 2-ethyl-2-n-hexyl-1,3-propanediol, 2,2-di-n-butyl-1,3-propanediol, 2-n-butyl-2-propyl-1,3-propanediol, and 2,2-di-n-hexyl-1,3-propanediol. The branched glycol components mentioned above are contained in a proportion of preferably 10 mol% or more, and more preferably of 20 mol% or more, based on the total glycol components (total diol components). Other than the above compounds, the glycol component contained in the copolymerized polyester resin (A) is most

preferably ethylene glycol. A small amount of diethylene glycol, propylene glycol, butanediol, hexanediol, 1,4-cyclohexanedimethanol, or the like may also be used in combination.

The dicarboxylic acid components contained as constituent components in the copolymerized polyester resin (A) are most preferably terephthalic acid and isophthalic acid. A small amount of other dicarboxylic acid components, such as fatty acid dicarboxylic acids (e.g., adipic acid, sebacic acid, and azelaic acid) and aromatic dicarboxylic acids (e.g., diphenyl dicarboxylic acid and 2,6-naphthalenedicarboxylic acid), may be added for copolymerization.

Other than the dicarboxylic acid components mentioned above, a combined use of a sulfonic acid group-containing terephthalic acid or a sulfonic acid group-containing isophthalic acid in an amount within the range of 1 to 10 mol% based on the total dicarboxylic acid components is preferable to impart water dispersibility. For example, 4-sulfoisophthalic acid, sulfoterephthalic acid, 5-sulfoisophthalic acid, 5-sodium sulfoisophthalic acid, 4-sulfonaphthalene-2,7-dicarboxylic acid, and 5-(4-sulfophenoxy)isophthalic acid can be preferably used.

The blocked isocyanate group-containing urethane resin (B) is preferably a thermally reactive water-soluble urethane in which the terminal isocyanate groups are sealed (referred to below as "blocked") with hydrophilic groups.

Examples of blocking agents for the isocyanate group include bisulfites, sulfonic group-containing phenols, alcohols, lactams, oximes, and active methylene compounds. Blocked isocyanate groups make a urethane prepolymer hydrophilic or water-soluble. When thermal energy is applied to the blocked isocyanate group-containing urethane resin (B) during the drying or heat-setting process in the film-forming process, the blocking agents are removed from the isocyanate groups, whereby the mixed copolymerized polyester resin (A) is immobilized in a self-crosslinked network of the urethane resin (B) while the urethane resin (B) reacts with the end groups of the copolymerized polyester resin (A). The urethane resin (B) at the time of preparation of a coating liquid is hydrophilic, and does not have sufficient water resistance. However, after coating, drying, and heat-setting to complete the thermal reaction, the hydrophilic groups, i.e., the blocking agents, of the urethane resin (B) are removed, whereby a coating film with excellent water resistance is obtained.

An example of the blocked isocyanate group-containing urethane resin (B) described above is ELASTRON (registered trademark), product name, manufactured by DKS Co. Ltd.

When preparing a coating liquid used in the present invention by mixing the copolymerized polyester resin (A) and the blocked isocyanate group-containing urethane resin (B), the mass ratio of the copolymerized polyester resin (A) to the blocked isocyanate group-containing urethane resin (B) of (A):(B) is preferably 28:72 to 72:28. The mass ratio is preferably within this range in order to achieve, for example, easy adhesion with inks, easy adhesion with hard-coating materials, and haze in a well-balanced manner.

In the present invention, a silicone surfactant (C) is incorporated in the composition for forming the readily adhesive layer. The content of the silicone surfactant (C) may be, for example, 0.01 to 0.3 parts by mass per 100 parts by mass of the total solids content of the copolymerized polyester resin (A) and the blocked isocyanate group-containing resin (B). The structure of the silicone is not particularly limited. The type and amount of silicone added can be appropriately selected within the range of the present invention in order to obtain a smooth and highly transparent film surface. Silicone surfactants manufactured by Shin-Etsu Chemical Co., Ltd., Dow Corning Toray Co., Ltd., and Momentive are suitable for use. The use of a silicone surfactant improves the dispersibility of particles in the coating layer, and suppresses particle aggregation. In addition, low-molecular-weight surfactants have a high diffusion ability against changes in surface tension caused by hydrophobic particles or hydrophobic resins, and easily maintain the thickness of the coating around the particles. These properties of low-molecular-weight surfactants are believed to contribute to the reduction of dropping out of the particles.

The silicone surfactant (C) is preferably a nonionic silicone surfactant that is not easily affected by pH changes. In particular, a polyoxyalkylene-modified silicone can be used. Specifically, the silicone surfactant (C) is represented by the following average composition formula (I):

$$R^1{}_xR^2{}_ySiO_{(4-x-y)/2} \quad (I),$$

wherein

$R^1$ is a substituted or unsubstituted monovalent hydrocarbon group that has 1 to 10, preferably 1 to 8 carbon atoms, and that does not contain an aliphatic unsaturated bond,

$R^2$ is an organic group represented by the general formula: $-C_fH_{2f}O(C_gH_{2g}O)_hR^3$ (wherein $R^3$ is a hydrogen atom, a monovalent hydrocarbon group, such as an unsubstituted or substituted alkyl group that has 1 to 8, in particular, 1 to 4 carbon atoms, and that does not contain an aliphatic unsaturated group, or an acetyl group, f is an integer of 2 to 12, in particular 2 to 6, g is an integer of 2 to 4, and h is an integer of 1 to 200, preferably 1 to 100, and still more preferably 1 to 50), and

x and y are positive values each satisfying $0 \leq x < 3.0$, $0 < y < 3.0$, and $0 < x + y \leq 3.0$, wherein x is preferably 0.1

to 2, y is preferably 0.2 to 2, and x + y is preferably 0.3 to 3.

Further, the polyoxyethylene content in the polyoxyalkylene-modified silicone is preferably 30 to 80 mass%.

Examples of the silicone surfactant (C) include, but are not limited to, those represented by the following structural formulas (1) to (3).

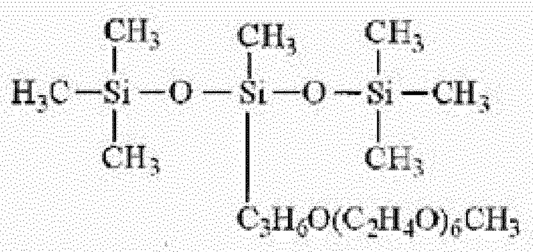

(1)

Polyoxyethylene content: 47.3 mass%

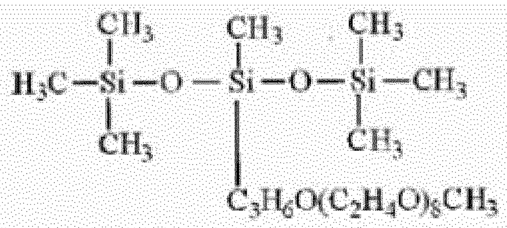

(2)

Polyoxyethylene content: 54.5 mass%

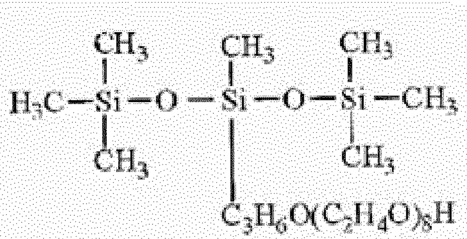

(3)

Polyoxyethylene content: 55.7 mass%

A composition comprising the copolymerized polyester resin (A), the blocked isocyanate group-containing urethane resin (B), and the silicone surfactant (C) in the amounts mentioned above can form a film that has no flaws.

In the present invention, the readily adhesive layer contains particles with an average particle diameter of 20 nm or more and 200 nm or less, whereby a film with fewer flaws is easily formed. The average particle diameter of the particles is preferably 30 nm or more and 150 nm or less, and more preferably 40 nm or more and 100 nm or less. Although it depends on the thickness of the readily adhesive layer to be formed, the use of particles with an average particle diameter that is three times or more the thickness of the readily adhesive layer is not preferable, because it causes a higher risk of the particles dropping out of the readily adhesive layer due to circumferential stress when the rolled products are tightly wound. The type of particles contained in the readily adhesive layer is not particularly limited. Examples include organic particles, such as siloxane-copolymerized acrylic resins, crosslinked polystyrene, polystyrene-divinylbenzene, polymethylmethacrylate, methyl methacrylate copolymers, methyl methacrylate-copolymerized crosslinked products, polytetrafluoroethylene, polyvinylidene fluoride, polyacrylonitrile, benzoguanamine resins, silicone resins, and acrylic resins; and inorganic particles, such as silica, alumina, titanium dioxide, zirconium oxide, kaolin, talc,

graphite, calcium carbonate, feldspar, molybdenum disulfide, carbon black, and barium sulfate. It is also possible to use core-shell particles with a multilayer structure consisting of materials with different properties in the inner and outer portions. Silica particles are particularly preferred for their various desirable properties as lubricants; and colloidal silica, which is in the form of spherical particles, is most desirable from the viewpoint of dispersibility.

In the present invention, the average particle diameter of the particles in the base film and the readily adhesive layer is determined by observing 30 particles in the cross-section of the film with a scanning electron microscope, and obtaining the average value as the average particle diameter.

As long as the object of the present invention is achieved, the particle diameter of irregularly shaped particles can be calculated as having a circular equivalent diameter. The circular equivalent diameter is a value obtained by dividing the area of the observed particle by n, calculating the square root, and multiplying by 2.

The particles contained in the readily adhesive layer preferably have a solids content of 0.3 parts by mass or more, more preferably 0.5 parts by mass or more, and still more preferably 1.0 parts by mass or more, per 100 parts by mass of the total solids content of the copolymerized polyester resin (A) and the blocked isocyanate group-containing urethane resin (B). The solids content is preferably 0.3 parts by mass or more, in order to improve slipperiness and easily reduce flaws. The content of the particles in the readily adhesive layer is preferably 18 parts by mass or less, more preferably 15 parts by mass or less, and still more preferably 8 parts by mass or less, per 100 parts by mass of the total solids content of the copolymerized polyester resin (A) and the blocked isocyanate group-containing urethane resin (B). The content of the particles is preferably 18 parts by mass or less, in order to lower the haze and improve transparency.

The thickness of the readily adhesive layer may be, for example, 5 nm to 500 nm, preferably 10 nm to 300 nm, and more preferably 20 nm to 150 nm.

In the polyester-based laminated film of the present invention, the method for stacking the readily adhesive layer is not particularly limited; either in-line coating or off-line coating, in which a biaxially stretched polyester film is used for processing, may be used. Any coating method is applicable, as long as it is known. It is preferable to use an in-line coating method, by which a film is efficiently obtained by applying a coating liquid obtained by diluting a composition comprising the copolymerized polyester resin (A), the blocked isocyanate group-containing urethane resin (B), and the silicone surfactant (C) with a solvent to an unstretched film or an uniaxially stretched film during the production process of the base polyester film by a gravure coating method or a bar coating method; and stretching the film in at least one uniaxial direction that is not stretched, followed by heat-setting. The resulting readily adhesive polyester film has excellent adhesion with various inks, in particular, UV-curable inks and oxidative polymerization (or solvent-type) inks, and is also suitable for secondary processing such as for labeling.

The solvent used for the coating liquid may be water or a mixed solvent of water and alcohol. The mass ratio of water to alcohol, i.e., water/alcohol, is preferably selected from the range of 100/0 to 85/15. When the mass of alcohol is 15 parts by mass or less based on the total mass of water and alcohol, a film can be easily produced by using a general-purpose biaxially stretched film-forming apparatus. The mass ratio of water/alcohol is desirably within the range of 98/2 to 90/10 to control the surface tension of the coating liquid by the addition of alcohol, and to thus easily adjust the appearance of the readily adhesive layer.

In the present invention, a gravure coating method or a bar coating method is suitably used as described above, and a highly transparent readily adhesive film with fewer flaws can be produced with a general-purpose biaxially stretched film-forming apparatus.

In order to reduce the formation of scratches during the film formation, it is desirable to minimize the number of rolls used from the application to winding. Therefore, it is desirable to go on to the drying process from the coating process without using rolls, and perform the drying process to heat-setting in a drying furnace in succession.

## Examples

The present invention is described below with reference to specific Examples. However, the present invention is not limited to these Examples. First, the evaluation methods used in the present invention are described.

## Evaluation Methods

### (1) Evaluation of Ink Adhesion

On the readily adhesive layer of each readily adhesive polyester film obtained in the Examples and Comparative Examples described later, an oxidative polymerization- (or solvent-) type ink was screen-printed using a 250-mesh screen, and air-dried for one day; or a UV curing-type ink was screen-printed using a 300-mesh screen, and cured by UV exposure of 500 mj/cm$^2$ with a UV exposure machine. Next, each inked surface was cross-cut using a cutter knife to form a grid of 100 squares (2 mm × 2 mm), and Cellophane (registered trademark, Nichiban Co., Ltd.) tape (width:

25 mm) was adhered to the surface so that no air bubbles appeared under the tape. Further, the tape surface was rubbed to sufficiently stick. Then, the tape was rapidly peeled off in the direction upward from the tape (the direction at an angle of 90 degrees) while the front and rear ends of the inked surface where the Cellophane (registered trademark) tape was not adhered were pressed down by hand. The inked surface after peeling off was observed to evaluate the adhesion based on the ink residual percentage.

Ink Brands for Use

1) Oxidative polymerization- (or solvent-) type inks

(a) RAM, black, manufactured by Seiko advance Ltd.
(b) SS-8 for PVC, white, manufactured by Toyo Ink Co., Ltd.

2) UV curing-type inks

(c) FDSS, black, manufactured by Toyo Ink Co., Ltd.
(d) UVA, black, manufactured by Seiko advance Ltd.

Evaluation:

After peeling off the cross-cut surface, the ink residual percentage was evaluated according to the following four criteria.

A: the residual percentage was 100%; no peeling at all
B: the residual percentage was 90% or more; no problem in practical use
C: the residual percentage was 80% or more; possible to use by adjusting the conditions
D: the residual percentage was less than 80%; unusable

(2) Evaluation of Adhesion with Hard-Coat Resin

The hard-coat coating liquid A described below was applied to the readily adhesive layer of each readily adhesive polyester film with a wire-bar coater so that the coating thickness after drying was 2 μm, dried with hot air at a temperature of 80°C for 60 seconds, and allowed to pass through a position 20 cm under a high-pressure mercury lamp with an output of 120 $W/cm^2$ at a speed of 10 m/min, thus obtaining a hard-coat film. The hard-coat layer had a refractive index of 1.48.

The coating liquid was obtained by mixing the following materials in the mass ratio shown below, and stirring the resulting mixture for 30 minutes or more for dissolution.

Then, a filter with a nominal filtration accuracy of 1 μm was used to remove undissolved matter to produce a hard-coat coating liquid A.

Coating Liquid A

- Methyl ethyl ketone: 64.48 mass%
- Pentaerythritol triacrylate: 11.45 mass% (manufactured by Shin-Nakamura Chemical Co., Ltd., NK Ester A-TMM-3LM-N, number of functional groups: 3)
- Tripropylene glycol diacrylate: 5.73 mass% (manufactured by Shin-Nakamura Chemical Co., Ltd., NK Ester APG-200, number of functional groups: 2)
- Dimethylaminoethyl methacrylate: 5.72 mass% (manufactured by Kyoeisha Chemical Co., Ltd., Light Ester DM, number of functional groups: 1)
- Silica particles: 11.45 mass% (manufactured by Nissan Chemical Corporation, MEK-ST-L, solids content: 30 mass%, average particle diameter: 50 nm)
- Photopolymerization initiator: 1.14 mass% (manufactured by Ciba Specialty Chemicals, Irgacure 184)
- Silicone surfactant: 0.03 mass% (manufactured by Dow Corning Toray Co., Ltd., DC57)

Specifically, cuts that reached the base film through the hard-coat layer were made to form a grid of 100 squares on the obtained hard-coat layer using a cutter guide with gap intervals of 2 mm. Next, Cellophane adhesive tape (Nichiban Co., Ltd., No. 405, width: 24 mm) was applied to the cut surface in the form of a grid, and rubbed with an eraser to ensure complete adhesion. Then, the Cellophane adhesive tape was vertically peeled off from the hard-coat layer surface of the hard coat film for molding, and the number of squares peeled off from the hard-coat layer surface of the base film was visually counted to determine the adhesion between the hard-coat layer and the base film according to the following formula. The squares that were partially peeled off were also counted as being peeled off, and the results were classified into four grades according to the following criteria.

$$\text{Adhesion (\%)} = (1 - \text{the number of squares peeled off}/100) \times 100$$

A: 100%
B: 90% or more and less than 100%
C: 80% or more and less than 90%
D: less than 80%

(3) Haze of Readily Adhesive Polyester Film

The haze of each readily adhesive polyester film was measured using a turbidimeter (manufactured by Nippon Denshoku Industries Co. Ltd., NDH2000) in accordance with JIS K 7136:2000.

(4) Evaluation of Flaws

The film having the readily adhesive layer was cut to A4 size, and irradiated with a brom light. Thereafter, scratches of 0.5 mm or more were counted. The evaluation was based on the following criteria.

A: 0
B: 1 to 5
D: 6 or more

(5) Evaluation of White Unevenness

In order to reproduce the pressurized state of the winding core, a film having the readily adhesive layer was cut into 10-cm-square pieces; and the top and bottom of a set of 10 sheets was sandwiched between 5-mm-thick SUS plates, and maintained for 24 hours in a pressure press at 50 $kgf/cm^2$. Then, the film appearance was evaluated. The evaluation was based on the following criteria.

A: No change compared to before the treatment
B: Blushing (white unevenness) was observed in an area of 5% or less
C: Blushing (white unevenness) was observed in an area of 10% or less
D: Blushing (white unevenness) was observed in an area exceeding 10%

Example 1

(1) Preparation of Coating Liquid

The coating liquid used in the present invention was prepared according to the following method. Specifically, 95 parts by mass of dimethyl terephthalate, 95 parts by mass of dimethyl isophthalate, 35 parts by mass of ethylene glycol, 145 parts by mass of neopentyl glycol, 0.1 parts by mass of zinc acetate, and 0.1 parts by mass of antimony trioxide were placed in a reaction vessel to perform an ester exchange reaction at 180°C for 3 hours. Next, 6.0 parts by mass of 5-sodium sulfoisophthalic acid was added thereto to perform an esterification reaction at 240°C for 1 hour, followed by a polycondensation reaction at 250°C for 2 hours under reduced pressure (10 to 0.2 mmHg) to thus obtain a copolymerized polyester resin (A) with a number average molecular weight of 19,500 and a softening point of 60°C.
Sixty-four parts by mass of the resulting copolymerized polyester resin, 144 parts by mass of butyl cellosolve, and 114 parts by mass of water mass were stirred with heating for 6 hours or more to obtain a uniform light-white aqueous dispersion with a solid concentration of 30%.
The copolymerized polyester resin (A) obtained as described above, a blocked isocyanate group-containing

self-crosslinkable polyurethane resin (manufactured by DKS Co. Ltd., ELASTRON (registered trademark) H-3DF) (B), a silicone surfactant (manufactured by Dow Corning Toray Co., Ltd., 67 Additive) (C1), and colloidal silica (manufactured by Nissan Chemical Corporation, SNOWTEX OL, average particle diameter: 40 nm) (P1) in a mass ratio, on a solids basis, of (A)/(B)/(C1)/(P1) of 50/50/0.1/5 were dispersed in a solvent to form a coating liquid (X) with a solids content of 7 mass%. The solvent used here was obtained by mixing water and isopropyl alcohol in a ratio of 95/5.

(2) Production of Laminated Polyester Film

As a starting material polymer, polyethylene terephthalate resin pellets that contained no particles and that had an intrinsic viscosity of 0.62 dl/g were dried under reduced pressure (133.3 Pa) at 135°C for 6 hours. Then, the polyethylene terephthalate resin was placed in an extruder I, while resin pellets obtained by adding 0.10% silica particles with an average particle diameter of 1.5 μm to the same polyethylene terephthalate were placed in an extruder II, which were melt-extruded at 285°C so that the thickness ratio of II/I/II = 5/90/5. The film was quenched and solidified on a metal roll at a surface temperature of 25°C to obtain a cast film.

The resulting cast film was heated to 95°C with a group of heated rolls and an infrared heater, and the coating liquid X was applied using a gravure coater to one side of a uniaxially stretched PET film running at a speed of 40 m/min. The amount of the coating liquid X applied was adjusted to a final solids content of 0.08 $g/m^2$. Subsequently, the resulting product was stretched 4 times in the transverse direction at 120°C in a tenter, and then heat-treated in the same tenter at 220°C while being loosened (3%) in the transverse direction, thus obtaining a readily adhesive polyester film having an entire film thickness of 50 μm. The thickness of the readily adhesive layer was 80 nm.

Examples 2 to 5

Readily adhesive polyester films were obtained in the same manner as in Example 1, except that the mass ratio, on a solids basis, of the copolymerized polyester resin (A) to the blocked isocyanate group-containing urethane resin (B) was changed to 30/70, 70/30, 25/75, or 75/25, as shown in Table 1.

Examples 6 to 8, and Comparative Example 1

Readily adhesive polyester films were obtained in the same manner as in Example 1, except that the silicone surfactant (C1) in the coating liquid was changed to KF-6012 manufactured by Shin-Etsu Chemical Co., Ltd. (C2), L-77 manufactured by Momentive (C3), or 502 Additive manufactured by Dow Corning Toray Co., Ltd. (C4), or that no surfactant was used, as shown in Table 1.

Comparative Example 2 and Example 9

Readily adhesive polyester films were obtained in the same manner as in Example 1, except that the silicone surfactant (C1) in the coating liquid was changed to a fluorosurfactant F-470 manufactured by DIC (C5), and the amount thereof was changed, or except that the amount of the same silicone surfactant (C1) was increased 5-fold, as shown in Table 1.

Examples 10 and 11

Readily adhesive polyester films were obtained in the same manner as in Example 1, except that the colloidal silica (P1) in the coating liquid was changed to SNOWTEX ZL manufactured by Nissan Chemical Corporation (P2, average particle diameter: 100 nm) or MP2040 manufactured by Nissan Chemical Corporation (P3, average particle diameter: 200 nm), and their amounts were changed, as shown in Table 1. Both P2 and P3 are silica particles, as are P1.

Examples 12 and 13

Readily adhesive polyester films were obtained in the same manner as in Example 1, except that the amount of colloidal silica (P1) in the coating liquid was changed to 20 parts by mass or 0.2 parts by mass, based on the mass of the total solids content of the copolymerized polyether resin (A) and the blocked isocyanate group-containing urethane resin (B), as shown in Table 1.

Examples 14 to 17, and Comparative Example 3

Readily adhesive polyester films were obtained in the same manner as in Example 1, except that the average

particle diameter and the amount of the particles contained in polyethylene terephthalate in the base film were changed as shown in Table 1.

Examples 18 and 19, and Comparative Example 4

Readily adhesive polyester films were obtained in the same manner as in Example 1, except that the base film was changed to a monolayer of only a layer obtained from the extruder II into which resin pellets obtained by adding 0.10% of silica particles with an average particle diameter of 0.5 μm to polyethylene terephthalate was placed, a monolayer of only a layer obtained from the extruder II into which resin pellets obtained by adding 0.02% of silica particles with an average particle diameter of 0.8 μm were added were placed, or a monolayer of only a layer obtained from the extruder I into which only polyethylene terephthalate resin was placed, as shown in Table 1.

Tables 1 and 2 below show the film-forming conditions and evaluation results of the Examples and Comparative Examples.

Table 1

| | Readily adhesive layer | | | | | | | | Base film | | | |
|---|---|---|---|---|---|---|---|---|---|---|---|---|
| | Copolymerized polyester resin (A) | Blocked isocyanate group-containing urethane resin (B) | Silicone surfactant (C) | | Particles (P) in readily adhesive layer | | | | Layer structure | Particles in the base film | | |
| | Content (part by mass) | Content (part by mass) | Type | Content (part by mass) | Type | Average particle diameter | Content (part by mass) | | | Average particle diameter | State of particles | Content in the base film |
| Ex. 1 | 50 | 50 | C1 | 0.1 | P1 | 40 nm | 5 | | 3 layers (II/I/II) | 1.5 μm | contained only in layer II (0.10%) | 0.01% |
| Ex. 2 | 30 | 70 | C1 | 0.1 | P1 | 40 nm | 5 | | 3 layers (II/I/II) | 1.5 μm | contained only in layer II (0.10%) | 0.01% |
| Ex. 3 | 70 | 30 | C1 | 0.1 | P1 | 40 nm | 5 | | 3 layers (II/I/II) | 1.5 μm | contained only in layer II (0.10%) | 0.01% |
| Ex. 4 | 25 | 75 | C1 | 0.1 | P1 | 40 nm | 5 | | 3 layers (II/I/II) | 1.5 μm | contained only in layer II (0.10%) | 0.01% |
| Ex. 5 | 75 | 25 | C1 | 0.1 | P1 | 40 nm | 5 | | 3 layers (II/I/II) | 1.5 μm | contained only in layer II (0.10%) | 0.01% |
| Ex. 6 | 50 | 50 | C2 | 0.1 | P1 | 40 nm | 5 | | 3 layers (II/I/II) | 1.5 μm | contained only in layer II (0.10%) | 0.01% |
| Ex. 7 | 50 | 50 | C3 | 0.1 | P1 | 40 nm | 5 | | 3 layers (II/I/II) | 1.5 μm | contained only in layer II (0.10%) | 0.01% |
| Ex. 8 | 50 | 50 | C4 | 0.1 | P1 | 40 nm | 5 | | 3 layers (II/I/II) | 1.5 μm | contained only in layer II (0.10%) | 0.01% |

(continued)

| | Readily adhesive layer | | | | | | | Base film | | | |
|---|---|---|---|---|---|---|---|---|---|---|---|
| | Copolymerized polyester resin (A) | Blocked isocyanate group-containing urethane resin (B) | Silicone surfactant (C) | | Particles (P) in readily adhesive layer | | | Layer structure | Particles in the base film | | |
| | Content (part by mass) | Content (part by mass) | Type | Content (part by mass) | Type | Average particle diameter | Content (part by mass) | | Average particle diameter | State of particles | Content in the base film |
| Ex. 9 | 50 | 50 | C4 | 0.5 | P1 | 40 nm | 5 | 3 layers (II/I/II) | 1.5 μm | contained only in layer II (0.10%) | 0.01% |
| Ex. 10 | 50 | 50 | C1 | 0.1 | P2 | 100nm | 2 | 3 layers (II/I/II) | 1.5 μm | contained only in layer II (0.10%) | 0.01% |
| Ex. 11 | 50 | 50 | C1 | 0.1 | P3 | 200 nm | 2 | 3 layers (II/I/II) | 1.5 μm) | contained only in layer II (0.10%) | 0.01% |
| Ex. 12 | 50 | 50 | C1 | 0.1 | P1 | 40 nm | 20 | 3 layers (II/I/II) | 1.5 μm | contained only in layer II (0.10%) | 0.01% |
| Ex. 13 | 50 | 50 | C1 | 0.1 | P1 | 40 nm | 02 | 3 layers (II/I/II) | 1.5 μm | contained only in layer II (0.10%) | 0.01% |
| Ex. 14 | 50 | 50 | C1 | 0.1 | P1 | 40 nm | 5 | 3 layers (II/I/II) | 1.0 μm | contained only in layer II (0.10%) | 0.01% |
| Ex. 15 | 50 | 50 | C1 | 0.1 | P1 | 40 nm | 5 | 3 layers (II/I/II) | 0.5 μm | contained only in layer II (0.10%) | 0.01% |
| Ex. 16 | 50 | 50 | C1 | 0.1 | P1 | 40 nm | 5 | 3 layers (II/I/II) | 0.5 μm | contained only in layer II (0.05%) | 0.005% |

(continued)

| | Readily adhesive layer | | | | | | | Base film | | | |
|---|---|---|---|---|---|---|---|---|---|---|---|
| | Copolymerized polyester resin (A) | Blocked isocyanate group-containing urethane resin (B) | Silicone surfactant (C) | | Particles (P) in readily adhesive layer | | | Layer structure | Particles in the base film | | |
| | Content (part by mass) | Content (part by mass) | Type | Content (part by mass) | Type | Average particle diameter | Content (part by mass) | | Average particle diameter | State of particles | Content in the base film |
| Ex. 17 | 50 | 50 | C1 | 0.1 | P1 | 40 nm | 5 | 3 layers (II/I/II) | 1.0 μm | contained only in layer II (0.50%) | 0.05% |
| Ex. 18 | 50 | 50 | C1 | 0.1 | P1 | 40 nm | 10 | Monolayer | 0.5 μm | contained entirely (0.10%) | 0.10% |
| Ex. 19 | 50 | 50 | C3 | 0.1 | P1 | 40 nm | 12 | Monolayer | 0.8 μm | contained entirely (0.02%) | 0.02% |
| Comp. Ex. 1 | 50 | 50 | None | 0 | P1 | 40 nm | 5 | 3 layers (II/I/II) | 1.5 μm | contained only in layer II (0.10%) | 0.01% |
| Comp. Ex. 2 | 50 | 50 | C5 | 0.05 | P1 | 40 nm | 5 | 3 layers (II/I/II) | 1.5 μm | contained only in layer II (0.10%) | 0.01% |
| Comp. Ex. 3 | 50 | 50 | C1 | 0.1 | P1 | 40 nm | 5 | 3 layers (II/I/II) | 3.0 μm | contained only in layer II (0.10%) | 0.01% |
| Comp. Ex. 4 | 50 | 50 | C1 | 0.1 | P1 | 40 nm | 5 | Monolayer | None | Not contained | None |

- The content (part by mass) of the copolymerized polyester resin (A) and the content of the blocked isocyanate group-containing urethane resin (B) are each on a solids basis, per 100 parts by mass of the total solids content of (A) and (B).
- The content (part by mass) of the silicone surfactant (C) and the content of the particles (P) in the readily adhesive layer are each on a solids basis, per 100 parts by mass of the total solids content of the copolymerized polyester resin (A) and the blocked isocyanate group-containing urethane resin (B).

Table 2

| | Ink adhesion | | | | Hard-coat adhesion | Haze (%) | Flaw | White unevenness |
|---|---|---|---|---|---|---|---|---|
| | Oxidation type | | UV type | | | | | |
| | (a) | (b) | (c) | (d) | | | | |
| Ex. 1 | A | A | A | A | A | 1.3 | A | A |
| Ex.2 | A | A | B | B | A | 1.6 | A | A |
| Ex. 3 | A | A | A | A | B | 1.2 | A | A |
| Ex. 4 | A | B | C | C | B | 2.2 | A | A |
| Ex. 5 | A | A | B | C | C | 1.2 | B | A |
| Ex. 6 | A | A | A | A | A | 1.5 | A | A |
| Ex. 7 | A | A | A | A | A | 1.1 | A | A |
| Ex. 8 | A | A | A | A | A | 1.6 | B | B |
| Ex. 9 | A | A | A | A | A | 1.2 | A | C |
| Ex. 10 | A | A | A | A | A | 1.8 | A | A |
| Ex. 11 | A | A | A | A | A | 2.0 | B | C |
| Ex. 12 | A | A | A | A | A | 2.2 | A | C |
| Ex. 13 | A | A | A | A | A | 0.7 | C | A |
| Ex. 14 | A | A | A | A | A | 1.1 | B | B |
| Ex. 15 | A | A | A | A | A | 0.9 | B | B |
| Ex. 16 | A | A | A | A | A | 0.7 | C | B |
| Ex. 17 | A | A | A | A | A | 3.0 | B | A |
| Ex. 18 | A | A | A | A | A | 0.8 | C | B |
| Ex. 19 | A | A | A | A | A | 0.7 | C | B |
| Comp. Ex. 1 | A | A | A | A | A | 1.5 | D | D |
| Comp. Ex. 2 | A | A | A | A | A | 1.0 | B | D |
| Comp. Ex. 3 | A | A | A | A | A | 3.5 | C | A |
| Comp. Ex. 4 | A | A | A | A | A | 0.5 | D | D |

Industrial Applicability

The present invention is capable of providing a readily adhesive polyester film that has fewer flaws and in which no appearance defects occur due to tight winding during the storage of rolled products, and providing a method for efficiently producing the readily adhesive polyester film.

## Claims

**1.** A readily adhesive polyester film comprising a polyester film as a base film and a readily adhesive layer on at least

one side of the base film,

wherein the base film contains particles with an average particle diameter of 0.1 μm or more and 2 μm or less in an amount of 1 mass% or less based on the mass of the base film, and
the readily adhesive layer is a cured product of a composition comprising a copolymerized polyester resin (A), a blocked isocyanate group-containing urethane resin (B), and a silicone surfactant (C).

**2.** The readily adhesive polyester film according to claim 1, wherein the readily adhesive layer contains particles with an average particle diameter of 20 nm or more and 200 nm or less.

**3.** The readily adhesive polyester film according to claim 1 or 2, wherein the copolymerized polyester resin (A) and the blocked isocyanate group-containing urethane resin (B) are present in the composition constituting the readily adhesive layer in a mass ratio, on a solids basis, of (A)/(B) of 28/72 to 72/28.

**4.** A method for producing the readily adhesive polyester film of any one of claims 1 to 3, the method comprising

preparing a coating liquid by diluting a composition comprising at least a copolymerized polyester resin (A), a blocked isocyanate group-containing urethane resin (B), and a silicone surfactant (C) with a solvent, the solvent containing water and alcohol in a mass ratio of water/alcohol of 100/0 to 85/15, and
forming a readily adhesive layer by applying the coating liquid to at least one side of an unstretched film or a uniaxially stretched film during a production process of a base film by a gravure coating method or a bar coating method, stretching the film in at least one uniaxial direction that is not stretched, and performing heat treatment.

## INTERNATIONAL SEARCH REPORT

International application No.
PCT/JP2020/001184

A. CLASSIFICATION OF SUBJECT MATTER

B05D 1/28(2006.01)i; B05D 3/02(2006.01)i; B05D 3/12(2006.01)i; B05D 5/00(2006.01)i; B05D 7/00(2006.01)i; B05D 7/04(2006.01)i; B05D 7/24(2006.01)i; B32B 27/36(2006.01)i; C08J 7/04(2020.01)i; C09J 11/00(2006.01)i; C09J 167/00(2006.01)i; C09J 175/04(2006.01)i

FI: B32B27/36; B05D7/04; B05D7/00 A; B05D7/24 303A; B05D7/24 303F; B05D7/24 303E; B05D7/24 302V; B05D7/24 302T; B05D7/00 K; B05D3/12 C; B05D5/00 Z; B05D3/02 Z; B05D1/28; C08J7/04 F; C09J175/04; C09J167/00; C09J11/00

According to International Patent Classification (IPC) or to both national classification and IPC

B. FIELDS SEARCHED

Minimum documentation searched (classification system followed by classification symbols)

B32B1/00-43/00; C08J7/04-7/06; B05D1/00-7/26; C09J1/00-5/10; C09J9/00-201/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2014-35362 A (TOYOBO CO., LTD.) 24.02.2014 (2014-02-24) claim 1, paragraphs [0011]-[0059], examples | 1-3 |
| Y | paragraphs [0065]-[0068] | 4 |
| X | JP 2014-159176 A (TOYOBO CO., LTD.) 04.09.2014 (2014-09-04) claim 1, paragraphs [0016]-[0065], examples | 1-3 |
| Y | paragraphs [0067]-[0068] | 4 |
| Y | JP 2015-166182 A (TOYOBO CO., LTD.) 24.09.2015 (2015-09-24) paragraphs [0012]-[0081], examples | 1-4 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 March 2020 (24.03.2020) | 07 April 2020 (07.04.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2020/001184

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-138465 A (TOYOBO BOSEKI KABUSHIKI KAISHA) 22.05.2001 (2001-05-22) claim 1, paragraphs [0019], [0036]-[0037], [0063], examples | 1-4 |
| Y | JP 2010-36368 A (FUJIFILM CORPORATION) 18.02.2010 (2010-02-18) paragraphs [0035]-[0036], [0121]-[0133], [0148] | 1-4 |
| A | JP 2017-193720 A (MITSUBISHI CHEMICAL CORPORATION) 26.10.2017 (2017-10-26) | 1-4 |
| A | WO 2017/082130 A1 (TOYOBO CO., LTD.) 18.05.2017 (2017-05-18) | 1-4 |
| A | JP 2009-269302 A (TOYOBO BOSEKI KABUSHIKI KAISHA) 19.11.2009 (2009-11-19) | 1-4 |
| A | JP 2013-1760 A (ASAHI KASEI CHEMICALS CORP.) 07.01.2013 (2013-01-07) | 1-4 |

Form PCT/ISA/210 (continuation of second sheet) (January 2015)

**INTERNATIONAL SEARCH REPORT**
Information on patent family members

International application No.
PCT/JP2020/001184

| Patent Documents referred in the Report | Publication Date | Patent Family | Publication Date |
|---|---|---|---|
| JP 2014-35362 A | 24 Feb. 2014 | (Family: none) | |
| JP 2014-159176 A | 04 Sep. 2014 | TW 201236870 A | |
| JP 2015-166182 A | 24 Sep. 2015 | JP 2012-182424 A<br>JP 2016-15491 A | |
| JP 2001-138465 A | 22 May 2001 | KR 10-2000-0053551 A | |
| JP 2010-36368 A | 18 Feb. 2010 | (Family: none) | |
| JP 2017-193720 A | 26 Oct. 2017 | (Family: none) | |
| WO 2017/082130 A1 | 18 May 2017 | KR 10-2018-0042439 A<br>CN 108349228 A<br>TW 201728461 A | |
| JP 2009-269302 A | 19 Nov. 2009 | (Family: none) | |
| JP 2013-1760 A | 07 Jan. 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007130984 A
- JP H1046012 A
- JP H0873623 A
- JP 2003231229 A
- JP 2011005648 A